# FASCICULE DE BREVET EUROPEEN

(11) **EP 1 818 364 B1**
(45) Date de publication et mention de la délivrance du brevet: **21.01.2009**
(21) Numéro de dépôt: 07300778.3
(22) Date de dépôt: 07.02.2007
(51) Int. Cl.: C08L 23/08, C08K 13/02

(54) **Composition à haute résistance à la propagation du feu**
Brandausbreitung verhindernde Zusammensetzung
Composition with a high resistance to fire propagation

(30) Priorité: 13.02.2006 FR 0650500
(43) Date de publication de la demande: 15.08.2007
(73) Titulaire: Nexans, 75008 Paris (FR)
(72) Inventeur: Pinto, Olivier, 69003, LYON (FR); Marty, Jean-Michel, 69110, SAINTE FOY LES LYON (FR)
(74) Mandataire: Feray, Valérie

(56) Documents cités:
- EP-A- 0 540 237
- EP-A- 1 283 237
- US-A1- 2002 039 869
- US-B1- 6 173 100
- US-B1- 6 290 887
- "Waterproof cable packed with water absorption material - uses foamed plastics contg. water absorption particles as packing material" DERWENT, 14 juillet 1988 (1988-07-14), XP002190771

## Description

La présente invention concerne une composition à haute résistance à la propagation du feu, ainsi qu'un conducteur électrique revêtu d'une telle composition.

Elle s'applique typiquement à la fabrication des câbles électriques, optiques, de transport d'énergie et/ou de transmissions d'informations devant pouvoir résister un certain temps aux fortes chaleurs d'un incendie.

Le document EP-A-1 283 237 propose une composition ignifugeante comprenant un polymère de base, un hydroxyde métallique et un carbonate d'un métal du Groupe IA du tableau périodique des éléments revêtu d'un sel métallique. Ladite composition est également utilisée comme gaine de câbles électriques ou optiques. Cependant, la tenue au feu de ce type de composition est limitée et ne permet pas de garantir une protection suffisante desdits câbles contre la dégradation thermique.

L'invention vise à résoudre les problèmes de l'art antérieur en proposant une composition, susceptible d'être utilisée en tant que gaine de protection de câbles, ayant des propriétés de tenue au feu améliorées.

A cet effet, l'invention a pour objet une composition à haute résistance à la propagation du feu comprenant un polymère de base, une charge ignifugeante apte à libérer de l'eau lors de sa décomposition thermique et, en outre, un polymère super absorbant distinct dudit polymère de base.

Grâce à l'invention, la dégradation de la composition due aux fortes chaleurs d'un incendie est limitée de façon significative par l'absorption par le polymère super absorbant de l'eau ainsi libérée in situ par la charge ignifugeante.

Dans un mode de réalisation avantageux, la charge ignifugeante est un hydroxyde métallique, de préférence choisi parmi les hydroxydes d'aluminium, de magnésium ou de calcium.

Dans un exemple de réalisation, la concentration de la charge ignifugeante est supérieure à 40% en poids de la composition afin de garantir une composition ayant une protection au feu efficace.

Selon une caractéristique, le polymère super absorbant est choisi parmi les polyacrylates, les polyacrylamides, les polymères de l'alcool vinylique, et leurs copolymères, ou leurs mélanges.

Les polymères super absorbants préférés sont les polyacrylates ou leurs copolymères, et plus particulièrement les polyacides acryliques réticulés ou les polymères acryliques anioniques.

Dans un exemple particulier, la concentration du polymère super absorbant est inférieure à 20% en poids de la composition afin de ne pas limiter les propriétés mécaniques de la composition, notamment d'obtenir une composition avec une contrainte et un allongement à la rupture suffisants.

Par ailleurs, le polymère de base est choisi parmi les polymères et copolymères d'éthylène ou de polypropylène, les polyamides, les polyesters, les polyuréthanes, les polychlorures de vinyle ou leurs mélanges.

L'invention concerne également un conducteur électrique revêtu d'au moins une couche de protection, ladite couche étant obtenue à partir de la composition selon l'invention.

De préférence, ladite composition est extrudée autour du conducteur électrique pour former la couche de protection.

L'avantage d'une telle protection est de garantir une isolation de haute performance du conducteur lors de fortes chaleurs d'un incendie.

L'invention sera mieux comprise grâce à la description qui suit illustrant divers modes de réalisation.

Tout d'abord, les polymères super absorbants sont de nature très hydrophile et ont la faculté de pouvoir absorber et stocker, généralement sous forme de gel, une quantité d'eau pouvant atteindre jusqu'à plusieurs fois leur propre poids. Cette absorption s'accompagne généralement d'un gonflement assez important dudit polymère.

Les polymères super absorbants sont principalement utilisés dans les produits d'hygiène féminine et produits pour incontinence telles que les couches pour bébés.

Ce type de polymères est également utilisé en tant qu'agent bloquant la pénétration de l'eau au sein de structures telles que des câbles d'énergie ou de télécommunication et se présentent alors sous la forme de filins ou de rubans permettant de garantir une bonne étanchéité au sein de ces câbles.

Ceci étant, l'objet de la présente invention n'est pas lié au problème d'étanchéité mais uniquement à l'obtention d'une composition, comprenant en outre un polymère super absorbant et une charge ignifugeante spécifique, ayant une résistance au feu améliorée.

Les charges ignifugeantes libérant de l'eau lors de leur décomposition thermique sont de préférence des hydroxydes métalliques tels que des hydroxydes de magnésium, d'aluminium ou de calcium.

Ces hydroxydes métalliques, sous l'action de températures élevées, de l'ordre de 170 à 300°C, se décomposent en oxydes métalliques et libèrent une ou des molécules d'eau.

Lorsqu'une composition à base d'un polymère contenant lesdits hydroxydes est soumise à combustion, l'eau ainsi dégagée permet de diluer la phase gazeuse de la flamme, et de refroidir ladite flamme.

L'incorporation, dans une même composition comprenant un polymère de base, d'au moins un hydroxyde métallique d'une part, et d'au moins un polymère super absorbant d'autre part, permet d'obtenir, de façon surprenante, une composition ayant d'excellentes propriétés ignifugeantes.

Ainsi, le polymère super absorbant absorbe l'eau libérée in-situ par l'hydroxyde métallique et la piège au sein de ladite composition en combustion.

Le gel super absorbant ainsi formé in situ réduit de façon efficace l'inflammabilité de la composition.

L'application principale mais non limitative de l'invention se trouve dans le domaine de la protection des conducteurs électriques revêtus d'au moins une couche de protection obtenue à partir de la composition selon l'invention.

Afin de montrer les avantages obtenus avec les compositions selon l'invention, sept compositions, dont quatre selon l'art antérieur et trois selon l'invention, sont préparées et leurs propriétés respectives d'ignifugation sont comparées à l'aide d'une analyse par cône-calorimètre.

Les compositions sont préparées en mélangeant successivement le polymère de base, l'hydroxyde métallique et le polymère super absorbant dans un mélangeur à 30 tr/min à une température de 130°C.

Le polymère de base est identique à toutes les compositions des échantillons et il s'agit d'un polyéthylène co-(acétate de vinyle) (EVA) commercialisé par la société ExxonMobil sous l'appellation Escorene UL328.

Les différents hydroxydes métalliques utilisés dans les compositions des échantillons sont l'hydroxyde d'aluminium commercialisé par la société Martinswerke sous l'appellation Martinal OL104WE et l'hydroxyde de magnésium commercialisé par la société Albemarle sous l'appellation Magnifin H10.

Enfin, les deux polymères super absorbants utilisés dans les compositions des échantillons sont un sel de polyacide acrylique réticulé (SAP1) commercialisé par la société Emerging Technology Inc. sous l'appellation Liquiblock 2G20 et un polymère acrylique anionique (SAP2) fourni par la société Ciba Specialty Chemicals sous la référence DPNT04-0091.

Le tableau 1 donne les compositions des échantillons des différents mélanges étudiés dans le cadre de l'invention. Les valeurs données sont fonction du pourcentage en poids de la composition.

**Tableau 1**

| Référence Echantillon | Polymère EVA | Hydroxyde d'aluminium | Hydroxyde de magnésium | SAP1 | SAP2 |
|---|---|---|---|---|---|
| A | 100 | | | | |
| B | 50 | 50 | | | |
| C | 50 | | 50 | | |
| D | 90 | | | | 10 |
| E | 45 | 50 | | 5 | |
| F | 45 | 50 | | | 5 |
| G | 45 | | 50 | | 5 |

Des analyses par cône-calorimètre sont réalisées afin d'évaluer précisément et de comparer le comportement au feu des différents échantillons.

Ce type d'analyse, consistant à brûler des échantillons à l'air ambiant tout en les soumettant à un rayonnement énergétique externe de puissance inférieure à 100 kW/m² et imposé par un chauffage radiant contrôlé en température, permet d'obtenir les éléments quantitatifs suivants concernant les échantillons testés :
- le pic de chaleur dégagée exprimé en kW/m²,
- le taux de chaleur dégagée exprimé en MJ/m²,
- la quantité de fumées dégagées, grandeur adimensionnelle, et
- l'Indice de Performance au Feu (IPF), obtenu par le rapport du temps à l'inflammation sur le pic de chaleur dégagée.

Pour ce faire, chaque échantillon est façonné en plaques carrées de 10 cm de côté et de 3 mm d'épaisseur.

Les échantillons ainsi conformés sont testés au moyen d'un calorimètre à cône conformément à la norme ISO 5660-1 relative aux débits calorifiques des produits du bâtiment.

Plus le pic de chaleur dégagée, le taux de chaleur dégagée ainsi que la quantité de fumées dégagées sont faibles numériquement, meilleures sont les propriétés ignifugeantes de la composition et inversement pour la valeur de l'IPF.

Le tableau 2 rassemble les données collectées par les analyses en cône-calorimètre avec les échantillons A à G.

**Tableau 2**

| Référence Echantillon | Pic de chaleur dégagée (kW/m²) | Taux de chaleur dégagée (MJ/m²) | Quantité de fumées dégagées | IPF |
|---|---|---|---|---|
| A | 1447 | 107,8 | 1388 | 0,029 |
| B | 431 | 79,1 | 797 | 0,109 |
| C | 584 | 76,1 | 697 | 0,108 |
| D | 1248 | 101,9 | 1462 | 0,022 |
| E | 242 | 68,6 | 445 | 0,252 |
| F | 272 | 61,8 | 428 | 0,173 |
| G | 328 | 69,8 | 790 | 0,189 |

Ainsi, au vu des résultats obtenus, l'ajout combiné d'un hydroxyde métallique et d'un polymère super absorbant dans une composition comprenant un polymère de base du type EVA, permet d'obtenir une composition ayant une résistance à la propagation du feu améliorée de façon significative.

Les données collectées sur les échantillons B selon l'art antérieur et les échantillons E et F selon l'invention portent sur des compositions d'EVA incorporant 50% d'hydroxyde d'aluminium.

La comparaison des résultats obtenus avec d'une part l'échantillon B et les échantillons E et F montre de façon significative que l'incorporation de 5% de SAP1 ou de SAP2 en substitution avec 5% d'EVA, permet d'améliorer significativement les propriétés de tenue au feu de la composition.

Plus particulièrement, les pics de chaleur dégagée des échantillons E et F sont réduits respectivement de 44% et 37% par rapport à l'échantillon B. Identiquement, les taux de chaleur dégagée sont réduits respectivement de 13% et 22% et les quantités de fumées dégagées de 44% et 46% par rapport à l'échantillon B. Les indices de performance au feu sont respectivement de 150 et 70% plus forts.

Les données collectées sur les échantillons C selon l'art antérieur et G selon l'invention portant sur des compositions d'EVA incorporant 50% d'hydroxyde de magnésium confirment les conclusions précédentes.

En effet, la substitution de 5% d'EVA par 5% de SAP dans l'échantillon G permet de réduire le pic de chaleur dégagée de 44% et le taux de chaleur dégagée de 8% par rapport à l'échantillon C. L'indice de performance au feu est augmenté de 75%.

Par ailleurs, on remarque que la seule incorporation de polymère super absorbant dans l'EVA n'apporte aucune amélioration notable des propriétés de tenue au feu de la composition comme le démontrent les résultats obtenus avec les compositions A et D.

La présente invention n'est pas limitée aux exemples de mise en oeuvre qui viennent d'être décrits et porte dans sa généralité sur toutes les compositions envisageables à partir des indications générales fournies dans l'exposé de l'invention.

Le polymère de base de la composition est un polymère de préférence synthétique, extrudable ou non, bien connu de l'homme du métier.

On peut également appliquer ladite composition aux isolants électriques ou aux gaines de câbles électriques ou optiques.

En outre, toutes les compositions selon l'invention peuvent contenir des agents classiques utilisés dans les compositions à haute résistance à la propagation du feu bien connus de l'homme du métier.

Enfin, les valeurs données, fonction du pourcentage en poids de la composition, ne sont pas à considérer au sens strict et peuvent varier dans des tolérances habituelles bien connues de l'homme du métier.

## Revendications

1. Composition à haute résistance à la propagation du feu comprenant :
- un polymère de base, et
- une charge ignifugeante apte à libérer de l'eau lors de sa décomposition thermique,
**caractérisée en ce que** la composition comprend en outre un polymère super absorbant distinct dudit polymère de base.

2. Composition selon la revendication 1, **caractérisée en ce que** la charge ignifugeante est un hydroxyde métallique.

3. Composition selon la revendication 2, **caractérisée en ce que** l'hydroxyde métallique est choisi parmi les hydroxydes d'aluminium, de magnésium, de calcium ou leurs mélanges.

4. Composition selon l'une quelconque des revendications 1 à 3, **caractérisée en ce que** le polymère super absorbant est choisi parmi les polyacrylamides, les polymères de l'alcool vinylique, et leurs copolymères, ou leurs mélanges.

5. Composition selon l'une quelconque des revendications 1 à 3, **caractérisée en ce que** le polymère super absorbant est choisi parmi les polyacrylates et leurs copolymères, ou leurs mélanges.

6. Composition selon la revendication 5, **caractérisée en ce que** le polymère super absorbant est un sel de polyacide acrylique réticulé ou un polymère acrylique anionique.

7. Composition selon l'une quelconque des revendications 1 à 6, **caractérisée en ce que** le polymère de base est choisi parmi les polymères et copolymères d'éthylène ou de polypropylène, les polyamides, les polyesters, les polyuréthanes, les polychlorures de vinyle ou leurs mélanges.

8. Composition selon l'une quelconque des revendications 1 à 7, **caractérisée en ce que** la concentration de la charge ignifugeante est supérieure à 40% en poids de la composition.

9. Composition selon l'une quelconque des revendications 1 à 8, **caractérisée en ce que** la concentration du polymère super absorbant est inférieure à 20% en poids de la composition.

10. Conducteur électrique revêtu d'au moins une couche de protection, ladite couche étant obtenue à partir de la composition selon l'une quelconque des revendications 1 à 9.

## Claims

1. A composition with high resistance to fire propagation, comprising:
- a base polymer, and
- a fireproofing filling, capable of releasing water during thermal decomposition thereof,
**characterized in that** the composition further comprises a superabsorbent polymer different from said base polymer.

2. The composition according to claim 1, **characterized in that** the fireproofing filling is a metal hydroxide.

3. The composition according to claim 2, **characterized in that** the metal hydroxide is chosen from aluminum, magnesium, calcium hydroxides, or blends thereof.

4. The composition according to any of claims 1 to 3, **characterized in that** the superabsorbent polymer is chosen from polyacrylamides, vinyl alcohol polymers, and copolymers thereof, or blends thereof.

5. The composition according to any of claims 1 to 3, **characterized in that** the superabsorbent polymer is chosen from polyacrylates and copolymers thereof, or blends thereof.

6. The composition according to claim 5, **characterized in that** the superabsorbent polymer is a reticulated acrylic polyacid salt or an anionic acrylic polymer.

7. The composition according to any of claims 1 to 6, **characterized in that** the base polymer is chosen from the polymers and copolymers of ethylene or polypropylene, polyamides, polyesters, polyurethanes, polyvinyl chlorides, or blends thereof.

8. The composition according to any of claims 1 to 7, **characterized in that** the concentration of the fireproofing filling is higher than 40 % in weight of the composition.

9. The composition according to any of claims 1 to 8, **characterized in that** the concentration of the superabsorbent polymer is lower than 20 % in weight of the composition.

10. An electrical conductor coated with at least one protective layer, said layer being obtained from the composition according to any of claims 1 to 9.

## Patentansprüche

1. Gegen Feuerausbreitung hochwiderstandsfähige Zusammensetzung, umfassend:
- ein Basispolymer, und
- einen feuerfest machenden Füllstoff, der in der Lage ist, während seiner Thermolyse Wasser abzugeben,
**dadurch gekennzeichnet, dass** die Zusammensetzung ferner ein superabsorbierendes Polymer umfasst, das sich vom Basispolymer unterscheidet.

2. Zusammensetzung nach Anspruch 1, **dadurch gekennzeichnet, dass** der feuerfest machende Füllstoff ein Metallhydroxid ist.

3. Zusammensetzung nach Anspruch 2, **dadurch gekennzeichnet, dass** das Metallhydroxid aus Aluminium-, Magnesium-, Kalziumhydroxiden oder deren Mischungen gewählt wird.

4. Zusammensetzung nach einem der Ansprüche 1 bis 3, **dadurch gekennzeichnet, dass** das superabsorbierende Polymer aus Polyacrylamiden, Vinylalkoholpolymeren und deren Copolymeren oder Mischungen gewählt wird.

5. Zusammensetzung nach einem der Ansprüche 1 bis 3, **dadurch gekennzeichnet, dass** das superabsorbierende Polymer aus Polyacrylaten und deren Copolymeren oder Mischungen gewählt wird.

6. Zusammensetzung nach Anspruch 5, **dadurch gekennzeichnet, dass** das superabsorbierende Polymer ein vernetztes Acrylpolysäuresalz oder ein anionisches Acrylpolymer ist.

7. Zusammensetzung nach einem der Ansprüche 1 bis 6, **dadurch gekennzeichnet, dass** das Basispolymer aus Polymeren und Copolymeren von Ethylen oder Polypropylen, Polyamiden, Polyestern, Polyurethanen, Polyvinylchloriden oder deren Mischungen gewählt wird.

8. Zusammensetzung nach einem der Ansprüche 1 bis 7, **dadurch gekennzeichnet, dass** die Konzentration des feuerfest machenden Füllstoffs größer ist als 40 Gew.-% der Zusammensetzung.

9. Zusammensetzung nach einem der Ansprüche 1 bis 8, **dadurch gekennzeichnet, dass** die Konzentration des superabsorbierenden Polymers geringer ist als 20 Gew.-% der Zusammensetzung.

10. Elektrischer Leiter, überzogen mit mindestens einer Schutzschicht, wobei die Schicht aus der Zusammensetzung nach einem der Ansprüche 1 bis 9 erlangt wird.
